(19) Europäisches Patentamt / European Patent Office / Office européen des brevets

(11) **EP 4 210 263 A1**

(12) **EUROPEAN PATENT APPLICATION**
published in accordance with Art. 153(4) EPC

(43) Date of publication:
**12.07.2023 Bulletin 2023/28**

(21) Application number: **21863699.1**

(22) Date of filing: **03.09.2021**

(51) International Patent Classification (IPC):
*H04L 5/00* *(2006.01)*

(52) Cooperative Patent Classification (CPC):
**H04L 5/00; H04L 25/02**

(86) International application number:
**PCT/CN2021/116437**

(87) International publication number:
**WO 2022/048637 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2020 CN 202010924341**

(71) Applicant: **Vivo Mobile Communication Co., Ltd.
Dongguan, Guangdong 523863 (CN)**

(72) Inventors:
• **YUAN, Pu
Dongguan, Guangdong 523863 (CN)**
• **JIANG, Dajie
Dongguan, Guangdong 523863 (CN)**

(74) Representative: **Murgitroyd & Company
Murgitroyd House
165-169 Scotland Street
Glasgow G5 8PL (GB)**

(54) **PILOT FREQUENCY PROCESSING METHOD AND RELATED DEVICE**

(57) This application discloses a pilot processing method and a related device. The method includes: receiving feedback information, where the feedback information is feedback information that is sent by a receiving device based on a first pilot received based on a first pilot pattern; and determining, based on the feedback information, whether to update the first pilot pattern.

Receive feedback information, where the feedback information is feedback information that is sent by a receiving device based on a first pilot received based on a first pilot pattern — 301

Determine, based on the feedback information, whether to update the first pilot pattern — 302

FIG. 3

EP 4 210 263 A1

**Description**

**CROSS-REFERENCE TO RELATED APPLICATIONS**

This application claims priority to Chinese Patent Application No. 202010924341.3 filed in China on September 4, 2020, which is incorporated herein by reference in its entirety.

**TECHNICAL FIELD**

This application relates to the field of communication technologies, and in particular, to a pilot processing method and a related device.

**BACKGROUND**

In a complex environment for electromagnetic wave transmission, due to a lot of scattering, reflecting, and refracting surfaces, radio signals reach at an antenna by different paths at different moments, that is, the multipath effect of transmission. When a prior symbol and a subsequent symbol of a sent signal reach at a same time by different paths, or, when a subsequent symbol reaches within a delay spread of a prior symbol, inter symbol interference (Inter Symbol Interference, ISI) is caused. Similarly, over the frequency domain, because of the Doppler effect caused by a relative speed between transmit and receive ends, each subcarrier carrying a signal has a different degree of frequency shift, leading to a loss of orthogonality of the subcarrier and overlapping, that is, inter carrier interference (Inter Carrier Interference, ICI) is caused. In the communication technologies, an orthogonal frequency division multiplex (Orthogonal frequency division multiplex, OFDM) multi-carrier system may be used, with an additional design of cyclic prefix (cyclic prefix, CP), to improve the anti-ISI performance. However, a width of a subcarrier spacing in the OFDM multi-carrier system is limited. As a result, in a scenario with high-speed moving (for example, on a high-speed train), a relatively large Doppler frequency shift due to a relatively high relative speed between transmit and receive ends impairs the orthogonality of OFDM subcarriers, leading to severe ICI between the subcarriers.

In the communication technologies, the technique of orthogonal time frequency space (Orthogonal Time Frequency Space, OTFS) may alternatively be used. The OTFS technique defines a transform from the delay-Doppler domain to the time-frequency domain. By service data and pilot mapping at both transmit and receive ends to the delay-Doppler domain, by using the pilot in the delay-Doppler domain, a delay and a Doppler characteristic of a channel are captured. In addition, by setting a guard interval, pilot pollution caused by ICI in an OFDM system is prevented, thereby bringing in more accurate channel estimation and helping improve a success rate of data decoding of a receiver.

In the OTFS technique, a pilot symbol in the delay-Doppler domain needs a guard interval around, but setting a too large guard interval causes a waste of resources, while setting a too small guard interval cannot prevent pilot pollution.

**SUMMARY**

Embodiments of this application provide a pilot processing method and a related device and can not only ensure accurate estimation but also reduce a waste of resources.

A first aspect provides a pilot processing method, performed by a sending device, and including:

receiving feedback information, where the feedback information is feedback information that is sent by a receiving device based on a first pilot received based on a first pilot pattern; and
determining, based on the feedback information, whether to update the first pilot pattern.

A second aspect provides a pilot processing method, performed by a sending device, and including:

receiving a measurement pilot; and
determining, based on a measurement result of the measurement pilot, whether to update a pilot pattern.

A third aspect provides a pilot processing method, performed by a receiving device, and including:

receiving, based on a first pilot pattern, a first pilot sent by a sending device; and
sending feedback information based on the first pilot, where the feedback information is used to determine whether to update the first pilot pattern.

A fourth aspect provides a pilot processing method, performed by a receiving device, and including:

sending a measurement pilot, where the measurement pilot is used to determine whether to update a pilot pattern.

A fifth aspect provides a pilot processing apparatus, including:

a first transceiving module, configured to receive feedback information, where the feedback information is feedback information that is sent by a receiving device based on a first pilot received based on a first pilot pattern; and
a first determining module, configured to determine, based on the feedback information, whether to update the first pilot pattern.

A sixth aspect provides a pilot processing apparatus, including:

a second transceiving module, configured to receive a measurement pilot; and
a second determining module, configured to determine, based on a measurement result of the measurement pilot, whether to update a pilot pattern.

A seventh aspect provides a pilot processing apparatus, including:
a third transceiving module, configured to: receive, based on a first pilot pattern, a first pilot sent by a sending device; and send feedback information based on the first pilot, where the feedback information is used to determine whether to update the first pilot pattern.

An eighth aspect provides a pilot processing apparatus, including:
a fourth transceiving module, configured to send a measurement pilot, where the measurement pilot is used to determine whether to update a pilot pattern.

A ninth aspect provides a communication device. The terminal includes a processor, a memory, and a program or an instruction that is stored in the memory and executable on the processor, and when the program or the instruction is executed by the processor, the steps of the method according to the first aspect are implemented or the steps of the method according to the third aspect are implemented.

A tenth aspect provides a readable storage medium. The readable storage medium stores a program or an instruction, and when the program or the instruction is executed by a processor, the steps of the method according to the first aspect are implemented, or the steps of the method according to the second aspect are implemented, or the steps of the method according to the third aspect are implemented, or the steps of the method according to the fourth aspect are implemented.

An eleventh aspect of an embodiment of this application provides a chip. The chip includes a processor and a communication interface, where the communication interface is coupled to the processor, and the processor is configured to run a program or an instruction of a network device to implement the steps of the method according to the first aspect or the second aspect.

According to the embodiments of this application, the feedback information is received, where the feedback information is feedback information that is sent by a receiving device based on a first pilot received based on a first pilot pattern; and whether to update the first pilot pattern is determined based on the feedback information. In this way, a pilot pattern can be updated dynamically, to not only ensure accurate estimation but also reduce a waste of resources.

## BRIEF DESCRIPTION OF DRAWINGS

FIG. 1 is a structural diagram of a network system to which an embodiment of this application can be applied;
FIG. 2 is a schematic diagram of pilot mapping in the delay-Doppler domain;
FIG. 3 is a flowchart of a pilot processing method according to an embodiment of this application;
FIG. 4 is a flowchart of another pilot processing method according to an embodiment of this application;
FIG. 5 is a flowchart of a pilot processing method according to an embodiment of this application;
FIG. 6 is a flowchart of another pilot processing method according to an embodiment of this application;
FIG. 7 is a structural diagram of a pilot processing apparatus according to an embodiment of this application;
FIG. 8 is a structural diagram of another pilot processing apparatus according to an embodiment of this application;
FIG. 9 is a structural diagram of a pilot processing apparatus according to an embodiment of this application;
FIG. 10 is a structural diagram of another pilot processing apparatus according to an embodiment of this application;
FIG. 11 is a structural diagram of a communication device according to an embodiment of this application;
FIG. 12 is a structural diagram of a network side device according to an embodiment of this application; and
FIG. 13 is a structural diagram of a terminal device according to an embodiment of this application.

**DESCRIPTION OF EMBODIMENTS**

The following clearly and completely describes the technical solutions in the embodiments of this application in conjunction with the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the description and the claims of this application are used to distinguish between similar objects instead of describing a specific order or sequence. It should be understood that, data used in this way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that the technology described in the embodiments of this application is not limited to a Long Term Evolution (Long Time Evolution, LTE)/LTE-advanced (LTE-Advanced, LTE-A) system, and may also be used in various wireless communication systems, for example, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The described technologies can be applied to both the systems and the radio technologies mentioned above as well as to other systems and radio technologies. A New Radio (New Radio, NR) system is described below as an example, and the term, NR, is used in most of the descriptions, but these technologies can also be used in an application other than an application of the NR system, for example, a sixth (6th Generation, 6G) communication system.

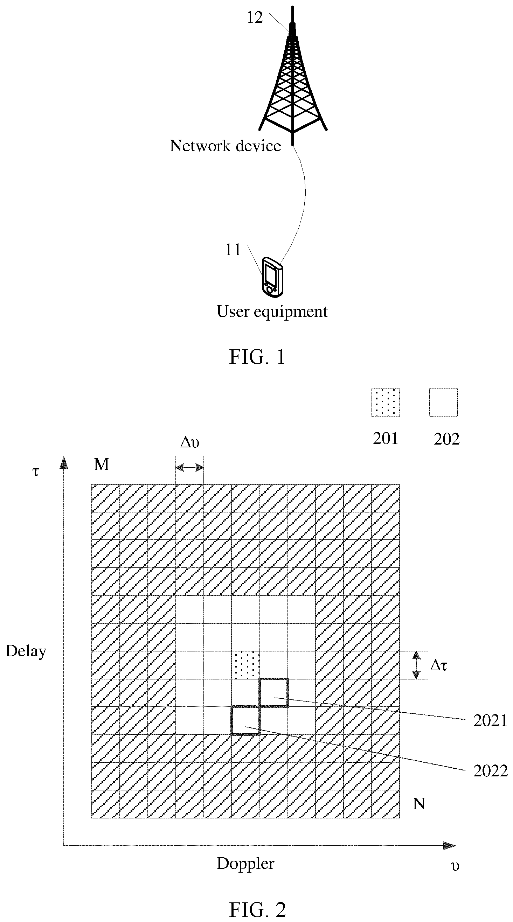

FIG. 1 is a block diagram of a wireless communication system to which an embodiment of this application can be applied. The wireless communication system includes user equipment 11 and a network device 12. The user equipment 11 may also be referred to as a terminal device or user equipment (User Equipment, UE). The user equipment 11 may be a terminal side device, for example, a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (Pedestrian User Equipment, PUE). The wearable device includes a band, a headset, eyeglasses, or the like. It should be noted that a specific type of the user equipment 11 is not limited in the embodiments of this application. The network device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

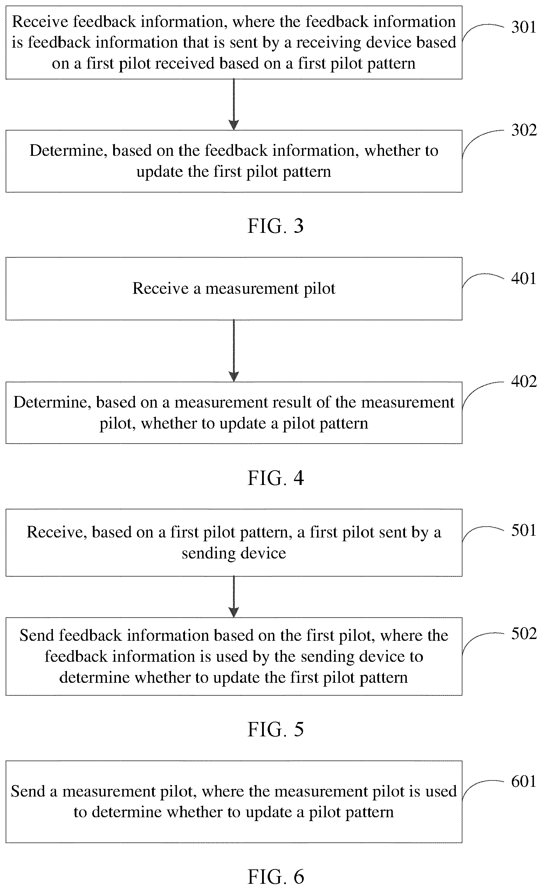

For ease of description, the following describes some content in the embodiments of this application:
In an orthogonal time frequency space (Orthogonal Time Frequency Space, OTFS) system, a transmitter maps a pilot pulse to the delay-Doppler domain, and a receiver estimates a channel response $h(v, \tau)$ in the delay-Doppler domain by analyzing a delay-Doppler image of the pilot, and obtains a channel response expression in the time-frequency domain based on a relationship shown in FIG. 3, to facilitate using a conventional technique for the time-frequency domain for signal analysis and processing. The pilot mapping over a delay-Doppler plane may be performed according to a manner shown in FIG. 2.

In FIG. 2, a single-point pilot 201 at $(l_p, k_p)$ of a sent signal includes guard symbols 202 around covering an area of $(2l_v + 1)(4k_v + 1) - 1$ and a data part covering $M \times N - (2l_v + 1)(4k_v + 1)$. While at a receive end, two shift peaks (for example, 2021 and 2022) appear within a guard band in a delay-Doppler domain grid, meaning that a channel has two secondary paths with different Doppler delays in addition to a primary path. Amplitudes, delays, and Doppler parameters of all secondary paths are measured to obtain a delay-Doppler domain expression of the channel, that is, $h(v, \tau)$. To prevent pilot pollution from data on lattice points of received signals, which causes inaccurate channel estimation, an area of guard symbols should satisfy the following condition:

$$l_\tau \geq \tau_{max} M\Delta f, k_v \geq v_{max} N\Delta T \qquad (1)$$

$\tau_{max}$ and $v_{max}$ are a maximum delay and a maximum Doppler frequency shift respectively, a plurality of guard symbols 202 surrounding the single-point pilot 201 to form a guard band, and the plurality of guard symbols 202 are empty resource elements.

It should be understood that an area of the guard band is determined based on $\tau_{max}$ and $v_{max}$. When $l_\tau = \tau_{max} M\Delta f$, $k_v = v_{max} N\Delta T$, not only a pilot signal at a receiver side is not polluted by data, but also pilot overheads are minimized. $\tau_{max}$ and $v_{max}$ depend on a channel characteristic, and a transmit end obtaining accurate $\tau_{max}$ and $v_{max}$ relies on precise measurement of channel estimation.

The pilot processing method according to the embodiments of this application is described in detail below in conjunction with the accompanying drawings in specific embodiments and application scenarios thereof.

Refer to FIG. 3. FIG. 3 is a flowchart of a pilot processing method according to an embodiment of this application. The method is performed by a sending device, as shown in FIG. 3, and includes the following steps:

Step 301: receiving feedback information, where the feedback information is feedback information that is sent by a receiving device based on a first pilot received based on a first pilot pattern.

In this embodiment of this application, the sending device may be understood as user equipment or a network device, and the receiving device may be understood as user equipment or a network device. After the receiving device receives the first pilot sent by the sending device, the first pilot may be used for channel estimation and measurement to demodulate a data packet. The first pilot pattern may be understood as a pilot pattern currently used for transceiving a pilot.

Optionally, the pilot pattern may be indicated by using a pilot configuration message. In some embodiments, the first pilot pattern is a rectangular resource pattern formed with $l \times k$ resource elements and includes a central resource element having a pilot pulse and empty resource elements set around the resource element having the pilot pulse. The empty resource elements set around the resource element having the pilot pulse form a guard band. As shown in FIG. 2, the first pilot pattern may be a rectangular resource pattern of 5×5 that includes resource elements corresponding to 201 and 202.

It should be understood that, after receiving the first pilot, the receiving device may send feedback information to the sending device based on the first pilot, for example, may send feedback information based on a measurement result of the first pilot, or may send feedback information based on a result of demodulating a data packet by using the first pilot. This is not further limited herein.

Step 302: determining, based on the feedback information, whether to update the first pilot pattern.

In this embodiment of this application, the sending device may determine, based on the received feedback information, whether to update the first pilot pattern, and in a case in which to update is determined, a second pilot pattern may be determined based on the feedback information. After the second pilot pattern is determined, indication information may be sent to indicate an updated second pilot pattern. After the second pilot pattern is determined, a pilot signal may further be sent based on the second pilot pattern. In a case in which not to update is determined, a pilot signal is sent subsequently still based on the first pilot pattern. To be specific, in this embodiment of this application, after the step of determining, based on the feedback information, whether to update the first pilot pattern, the method further includes:

determining a second pilot pattern in a case in which the first pilot pattern is determined based on the feedback information to be updated;
sending first indication information, where the first indication information is used to indicate the second pilot pattern; and
sending a second pilot based on the second pilot pattern.

A manner of indicating the second pilot pattern by using the first indication information may be set based on actual requirements. For example, the second pilot pattern may be indicated implicitly or explicitly. Optionally, in some embodiments, the first indication message may be sent by using a pilot configuration message. Indicating the second pilot pattern may be understood as indicating a pilot configuration corresponding to the second pilot pattern. For example, an index value of the pilot configuration corresponding to the second pilot pattern may be carried in the first indication information.

It should be understood that, after sending the second pilot pattern, the sending device may send the second pilot based on the second pilot pattern, and the receiving device may receive the second pilot based on the second pilot pattern. In this way, a pilot pattern can be configured with flexibility for the receiving device, not only ensuring accurate estimation but also reducing a waste of resources.

According to this embodiment of this application, the feedback information is received, where the feedback information is feedback information that is sent by a receiving device based on a first pilot received based on a first pilot pattern; and whether to update the first pilot pattern is determined based on the feedback information. In this way, a pilot pattern can be updated dynamically, to not only ensure accurate estimation but also reduce a waste of resources.

This embodiment of this application further provides a pilot processing method. The method is performed by a sending device, and includes: receiving feedback information, and determining the second pilot pattern based on the feedback information, where the feedback information is determined by the receiving device based on the first pilot sent by the sending device based on the first pilot pattern. Optionally, after the second pilot pattern is determined, the first indication information may further be sent, to indicate the second pilot pattern to the receiving device. After the second pilot pattern is determined, the second pilot may further be sent based on the second pilot pattern. Optionally, in some embodiments, the feedback information includes at least one of the following:

a measurement result of the first pilot within a first preset time period;
second indication information, where the second indication information is used to indicate a recommended pilot pattern, and the recommended pilot pattern is determined based on the measurement result of the first pilot;
third indication information, where the third indication information is used to indicate adjustment information of a length of each side in the first pilot pattern, and the adjustment information is determined based on the measurement result of the first pilot; and
a hybrid automatic repeat request HARQ feedback for data packet decoding based on a channel estimation result of the first pilot.

In this embodiment of this application, a time length of the first preset time period is $Q \times T$, Q is an integer greater than 1, and T is a sending periodicity of the first pilot. By feeding back the measurement result of the first pilot within the first preset time period, too frequent feedbacks can be avoided. Optionally, in some embodiments, the measurement result of the first pilot includes a maximum delay ($\tau_{max}$) and a maximum Doppler frequency shift ($v_{max}$) of a multipath channel. In this embodiment, measurement results of a plurality of times may be included within the first preset time period. A value of a measurement result of each time is compared with another, and a largest value of the maximum delay and a largest value of the maximum Doppler frequency shift of the multipath channel in the measurement results of the plurality of times are used as the feedback information. Clearly, in other embodiments, the feedback may be performed in another manner, for example, by using an average value of all measurement results or an average value of measurement results of a plurality of times that satisfy a specific condition. This is not further limited herein.

For the second indication information, the receiving device may determine, based on the measurement result of the first pilot within the first preset time period, whether to update the first pilot pattern. In a case in which to update is determined, a recommended pilot pattern that is recommended to be updated to may be determined based on the measurement result of the first pilot within the first preset time period, and the sending device may indicate the recommended pilot pattern by using the second indication information. In this case, an index value of a pilot configuration corresponding to the recommended pilot pattern may be carried in the second indication information. The sending device may determine, based on the recommended pilot pattern, whether to update the first pilot pattern. In a case in which to update is determined, the recommended pilot pattern may be used or may not be used. If the recommended pilot pattern is not used, an index value of a pilot configuration corresponding to a re-determined pilot pattern may be carried in the second indication information; or if the recommended pilot pattern is used, identity information of the recommended pilot pattern that is agreed to be used is carried in the second indication information, or the index value of the pilot configuration corresponding to the recommended pilot pattern is directly carried. This is not further limited herein. In this embodiment, because the recommended pilot pattern is directly reported, a numerical value of the measurement result does not need to be indicated, thereby reducing bit information for reporting.

The adjustment information in the third indication information may be understood as including three cases, that is, increased, decreased, and unchanged.

For example, in some embodiments, the third indication information may directly indicate a state of a side length increase, a side length decrease, or an unchanged side length. In a case in which a side length increase is indicated, the sending device may determine that each side length may increase by a preset length according to a predefined rule; or in a case in which a side length decrease is indicated, the sending device may determine that each side length may decrease by a preset length according to a predefined rule. For example, currently, the first pilot pattern is a $5 \times 5$ rectangular resource pattern, and when the third indication information indicates an increase, the second pilot pattern may be determined to be a $6 \times 6$ rectangular resource pattern; or when the third indication information indicates a decrease, the second pilot pattern may be determined to be a $4 \times 4$ rectangular resource pattern. It should be understood that per unit of a length increase or decrease may be agreed in a protocol, or may be decided by the sending device.

In some other embodiments, the third indication information may include a status identifier and an adjustment amount indication. In this case, the status indication may be used to indicate a state of a side length increase, a side length decrease, or an unchanged side length; or may be used to indicate a state of a side length increase or a side length decrease. In this embodiment, the status identifier may be used to indicate an unchanged side length, or an unchanged side length may be indicated by the adjustment amount indication indicating 0. In a case in which a side length increase or a side length decrease is indicated, a change of increase or decrease may be indicated by using the adjustment amount indication. For example, the adjustment amount indicating M represents that a side length increases or decreases by M units of length, and per unit of length may be agreed in a protocol or may be determined by the sending device. This is not further limited herein.

Optionally, in some other embodiments, that a group of numerical values may include an increased numerical value, a decreased numerical value, and an unchanged numerical value may be defined. The third indication information may indicate one numerical value, and the sending device may determine whether to update the first pilot pattern based on the indicated numerical value, and determine an updated second pilot pattern.

It should be understood that in this embodiment of this application, different side lengths may be indicated by using different indication information. That is, the third indication information carries indication information corresponding to each side length, or an adjustment status of two side lengths may be indicated by using same indication information, that is, adjustment information of the two side lengths is the same.

The foregoing hybrid automatic repeat request (Hybrid automatic repeat request, HARQ) feedback may include an acknowledgment (Acknowledgement, ACK) feedback or a negative acknowledgement (Negative Acknowledgement, NACK) feedback. For example, in a case in which demodulation fails, the receiving device sends a NACK feedback, or in a case in which demodulation is successful, the receiving device sends an ACK feedback. Optionally, in some embodiments, the sending device may determine, based on a quantity of NACK feedbacks and ACK feedbacks that are received within a preset time period, whether to update the first pilot pattern, and determine the updated second pilot pattern. For example, in some embodiments, if a quantity of NACK feedbacks received within the preset time period is greater than or equal to one threshold, to update the first pilot pattern may be determined, and the sending device determines the updated second pilot pattern based on a range of the quantity of the NACK feedbacks. For example, a greater range of the quantity of the NACK feedbacks means a greater side length of the second pilot pattern.

Optionally, in some embodiments, before the step of receiving feedback information, the method further includes: sending or receiving a pilot configuration message, where the pilot configuration message is used to configure the first pilot pattern.

In this embodiment, in a scenario of user equipment and user equipment interaction, the sending device may configure the first pilot pattern for the receiving device. In this case, an action of the sending device may be understood as sending a pilot configuration message. In a scenario of a network device interacting with user equipment, the network device usually configures the first pilot pattern for the user equipment. Foe an uplink pilot, an action of the sending device may be understood as receiving a pilot configuration message. For a downlink pilot, an action of the sending device may be understood as sending a pilot configuration message. An example in which the sending device sends a pilot configuration message is used for description. A table of correspondence relationship between a pilot configuration and an index value may be preconfigured or agreed in a protocol, and the sending device may send an index value via the pilot configuration message. After receiving the pilot configuration message, the receiving device may determine the first pilot pattern based on the index value in the pilot configuration message. After receiving a pilot, the receiving device may perform pilot measurement and channel estimation based on the first pilot pattern.

Optionally, in some other embodiments, before the step of sending first indication information, the method further includes:

determining a target index value corresponding to the second pilot pattern based on a correspondence relationship between a frame structure configuration and a pilot configuration, where
the first indication information carries the target index value, and the target index value is used to indicate a target pilot configuration corresponding to the second pilot pattern.

In this embodiment, by using the correspondence relationship between the frame structure configuration and the pilot configuration, the pilot configuration corresponding to the second pilot pattern is implicitly indicated by indicating the frame structure configuration.

Optionally, the pilot configuration includes a side length of a pilot pattern; further, the pilot pattern further includes at least one of information about a power of a resource element occupied by the pilot, pilot power information, and a pilot sending periodicity.

The side length of the pilot pattern may be determined based on a resource element occupied by a pilot in the delay-Doppler domain and a resource element occupied by a guard band in the delay-Doppler domain. The information about a power of a resource element occupied by the pilot may include an offset (offset) of the power of the resource element occupied by the pilot relative to a power of a resource element occupied by data in the delay-Doppler domain, or an absolute value of the power of the resource element occupied by the pilot.

Optionally, the frame structure configuration includes a side length of a delay-Doppler resource block. Further, the frame structure configuration further includes at least one of a subframe length and a subcarrier spacing.

The side length of the delay-Doppler resource block may be denoted as (M, N), and the side length of the pilot pattern may be denoted as (l, k). The frame structure may be understood as a resource grid of M×N in the delay-Doppler domain.

In this embodiment, based on the correspondence relationship between the frame structure configuration and the pilot configuration, the pilot configuration corresponding to the second pilot pattern may be indicated, and a pilot configuration corresponding to the first pilot pattern may further be indicated. This is not further limited herein.

It should be understood that in this embodiment, the receiving device may indicate the second pilot pattern and the frame structure configuration by using a frame indicator message, thereby reducing signaling overheads.

Optionally, in some embodiments, the correspondence relationship between the frame structure configuration and the pilot configuration includes any one of the following:

a one-to-one correspondence between the frame structure configuration and the pilot configuration; and
a correspondence between each frame structure configuration and at least two different pilot configurations.

In this embodiment, the correspondence relationship between the frame structure configuration and the pilot configuration may be understood as any one of the following:

a correspondence relationship between $(M, N)$ and $(l_\tau, k_v)$;
a correspondence relationship between $(M, N)$ and $(l_\tau, k_v,$ the pilot power information);
a correspondence relationship between $(M, N)$ and $(l_\tau, k_v,$ the pilot sending periodicity);
a correspondence relationship between $(M, N,$ a subframe length) and $(l_\tau, k_v,$ the pilot sending periodicity);
a correspondence relationship between $(M, N,$ the subframe length) and $(l_\tau, k_v,$ the pilot sending periodicity, the pilot power information); and
a correspondence relationship between $(M, N,$ the subframe length, $\Delta f)$ and $(l_\tau, k_v,$ the pilot sending periodicity, the pilot power information).

Optionally, the correspondence relationship between the frame structure configuration and the pilot configuration includes any one of the following:

a one-to-one correspondence between the frame structure configuration and the pilot configuration; and
a correspondence between each frame structure configuration and at least two different pilot configurations.

In this embodiment, the one-to-one correspondence between the frame structure configuration and the pilot configuration may be understood as that the pilot pattern is related to a size of a data packet. To be specific, the side length of the pilot pattern $(l_\tau, k_v)$ is in direct proportion to the side length $(M, N)$ of the delay-Doppler resource block. For example, a bigger data packet is more important, and therefore, a larger pilot pattern ensures that estimation is accurate; while a smaller data packet is less important, and even if estimation accuracy does not satisfy a decoding requirement, the problem can be solved by flexible retransmission. In this way, not only accurate estimation is ensured, but also an occupation of resources is reduced. An example in which the correspondence relationship between the frame structure configuration and the pilot configuration is $(M, N)$ and $(l_\tau, k_v)$ is used for description. In this case, an index table of the frame structure configuration and the pilot configuration may be agreed in a protocol or preconfigured by the sending device and is as shown in Table 1:

**Table 1**

| Index | Frame structure configuration | Pilot configuration |
|---|---|---|
| 1 | $(M_1, N_1)$ | $(l_1, k_1)$ |
| 2 | $(M_2, N_2)$ | $(l_2, k_2)$ |
| ... | ... | ... |

Optionally, in a case in which each frame structure configuration corresponds to at least two different pilot configurations, the target index value includes a first index value, and the first index value is used to indicate the target pilot configuration corresponding to the second pilot pattern.

Optionally, in some embodiments, the target index value further includes a second index value, and the second index value is used to indicate the frame structure configuration corresponding to the target pilot configuration.

# EP 4 210 263 A1

In this embodiment, because one frame structure configuration corresponds to at least two different pilot configurations, a pilot configuration corresponding to a currently configured frame structure configuration may be indicated by using the first index value. In this way, the second pilot pattern may be indicated by using different first indication information. For example, in a case in which a frame structure is relatively stable and is less likely to be changed, only a changed pilot configuration is indicated. To be specific, the target index value only includes the first index value. In this case, the second pilot pattern is determined based on the first index value and the current frame structure configuration. In a case in which a frame structure is changed, a changed pilot configuration and a changed frame structure configuration are indicated. To be specific, the target index value includes the first index value and the second index value. In this case, the second pilot pattern is determined based on the first index value and the second index value, and the frame structure configuration indicated by the second index value may be understood as the currently configured frame structure configuration.

An example in which the correspondence relationship between the frame structure configuration and the pilot configuration is $(M, N)$ and $(l_\tau, k_v)$ is used for description. In this case, an index table of the frame structure configuration and the pilot configuration may be agreed in a protocol or preconfigured by the sending device and is as shown in Table 2:

**Table 2**

| Index 1 | Frame structure configuration | Index 2 | Pilot configuration |
|---------|-------------------------------|---------|---------------------|
| 1       | $(M_1, N_1)$                  | 1       | $(l_1, k_1)$        |
|         |                               | 2       | $(l_2, k_2)$        |
| 2       | $(M_2, N_2)$                  | 1       | $(l_3, k_3)$        |
|         |                               | 2       | $(l_4, k_4)$        |
| ...     | ...                           | ...     | ...                 |

Optionally, in some embodiments, the method further includes:
sending, for intervals of second preset time periods, fourth indication information, where the fourth indication information is used to indicate an adjustment of the first pilot pattern into a third pilot pattern, and a side length of the third pilot pattern is greater than or equal to a preset value.

In this embodiment, the third pilot pattern may be understood as a pilot pattern specially designed for initially obtaining channel information. At an initial obtaining stage of communication, channel information remains unknown to the receiving device. To ensure accuracy of initial channel state estimation, the sending device may send a pilot with a large enough guard interval, that is, send a pilot based on the third pilot pattern. In this embodiment, sending a pilot based on the third pilot pattern may be understood as sending an initial signal. The third pilot pattern configured for the receiving device by using the fourth indication information is sent periodically, which is equivalent to sending the initial signal periodically, to accurately measure and refresh $\tau_{max}$ and $v_{max}$ of a channel. In this way, a too small guard interval of the pilot pattern is avoided, so as to prevent an inaccurate delay-Doppler response of the channel because the channel gets worse suddenly.

Optionally, in some embodiments, that a side length of the third pilot pattern is greater than or equal to a preset value may be understood as that both values of $l$ and $k$ are greater than or equal to the preset value, or a value of $l$ is greater than or equal to a first preset value, and a value of k is greater than or equal to a second preset value. The preset value may be understood as a side length value corresponding to an optimal pilot pattern.

Further, refer to FIG. 4. An embodiment of this application further provides another pilot processing method, performed by a sending device, and including the following steps:
Step 401: receiving a measurement pilot.

In this embodiment of this application, the measurement pilot is used for pilot measurement, and the sending device may determine a suitable pilot pattern based on the measurement pilot. For example, the sending device may measure the measurement pilot to obtain a measurement result, and determine a channel status based on the measurement result, to determine a suitable pilot pattern. Optionally, the sending device may determine, based on the measurement pilot, whether to update a previous pilot pattern.

Optionally, the receiving device may send the measurement pilot periodically, aperiodically, or in a manner of triggering by the sending device. The measurement pilot may be a pilot sent based on a measurement pilot pattern, or may be a pilot sent based on a first pilot pattern. In other words, a pilot pattern corresponding to the measurement pilot is a measurement pilot pattern or a first pilot pattern used for channel measurement and channel estimation. The first pilot pattern is a rectangular resource pattern formed with $l \times k$ resource elements and includes a central resource element having a pilot pulse and empty resource elements set around the resource element having the pilot pulse.

Step 402: determining, based on a measurement result of the measurement pilot, whether to update a pilot pattern.

In this embodiment, the measurement result of the measurement pilot may include a maximum delay and a maximum Doppler frequency shift of a multipath channel. The sending device may determine, based on the measurement result of the measurement pilot, whether to update the pilot pattern currently configured for the receiving device, and may determine, based on the measurement result, a second pilot pattern in a case in which the pilot pattern currently configured for the receiving device is determined to be updated. In a case in which not to update is determined, a pilot signal is sent subsequently still based on the first pilot pattern. To be specific, in this embodiment of this application, after the step of determining, based on a measurement result of the measurement pilot, whether to update a pilot pattern, the method further includes:

determining, based on the measurement result, a second pilot pattern in a case in which the pilot pattern is determined to be updated based on the measurement result of the measurement pilot;
sending first indication information, where the first indication information is used to indicate the second pilot pattern; and
sending a second pilot based on the second pilot pattern.

In some embodiments, based on whether the measurement result is greater than or equal to a preset value, if the measurement result is greater than or equal to the preset value, the first pilot pattern may be determined to be updated, and the second pilot pattern is determined based on the measurement result; or if the measurement result is less than the preset value, the first pilot pattern is determined not to be updated. Alternatively, if the measurement result is less than the preset value, the first pilot pattern is determined to be updated, and the second pilot pattern is determined based on the measurement result; or if the measurement result is greater than or equal to the preset value, the first pilot pattern is determined not to be updated.

In some other embodiments, in a case in which the measurement pilot is a pilot sent based on a pilot pattern for measurement, a preferred pilot pattern may first be determines, and whether to update the first pilot pattern is determined based on a difference between the preferred pilot pattern and the first pilot pattern. In a case in which the first pilot pattern is determined to be updated, the preferred pilot pattern may first be determined to be the second pilot pattern, or the second pilot pattern is determined based on the preferred pilot pattern.

A manner of indicating the second pilot pattern by using the first indication information may be set based on actual requirements. For example, the second pilot pattern may be indicated implicitly or explicitly. Optionally, in some embodiments, the first indication message may be sent by using a pilot configuration message. Indicating the second pilot pattern may be understood as indicating a pilot configuration corresponding to the second pilot pattern. For example, an index value of the pilot configuration corresponding to the second pilot pattern may be carried in the first indication information.

After sending the second pilot pattern, the sending device may send the second pilot based on the second pilot pattern, and the receiving device may receive the second pilot based on the second pilot pattern. In this way, a pilot pattern can be configured with flexibility for the receiving device, not only ensuring accurate estimation but also reducing a waste of resources.

In this embodiment of this application, by receiving the measurement pilot, whether to update a pilot pattern is determined based on a measurement result of the measurement pilot. In this way, a pilot pattern can be updated dynamically, to not only ensure accurate estimation but also reduce a waste of resources.

Optionally, in some embodiments, the step of determining, based on the measurement result, a second pilot pattern in a case in which the pilot pattern is determined to be updated based on the measurement result of the measurement pilot includes:

determining, based on the measurement result of the measurement pilot within a third preset time period, the second pilot pattern in a case in which the pilot pattern is determined to be updated based on the measurement result of the measurement pilot within the third preset time period.

In this embodiment of this application, in a case in which the measurement pilot is a pilot periodically sent by a receiving device, a time length of the third preset time period is $Q \times T$, Q is an integer greater than 1, and T is a sending periodicity of the measurement pilot.

Measurement results of a plurality of times may be included within the third preset time period. A value of a measurement result of each time is compared with another, and a largest value of the maximum delay and a largest value of the maximum Doppler frequency shift of the multipath channel in the measurement results of the plurality of times are used as the feedback information. Clearly, in other embodiments, the feedback may be performed in another manner, for example, by using an average value of all measurement results or an average value of measurement results of a plurality of times that satisfy a specific condition. This is not further limited herein. Because a pilot pattern of the receiving device is updated based on the measurement results of the plurality of times within the third preset time period, a frequency of updating the pilot pattern is lower, to prevent too frequent updates of the pilot pattern.

Optionally, in some embodiments, before the step of sending first indication information, the method further includes:

determining a target index value corresponding to the second pilot pattern based on a correspondence relationship between a frame structure configuration and a pilot configuration, where
the sent first indication information carries the target index value, and the target index value is used to indicate a target pilot configuration corresponding to the second pilot pattern.

In this embodiment, by using the correspondence relationship between the frame structure configuration and the pilot configuration, the pilot configuration corresponding to the second pilot pattern is implicitly indicated by indicating the frame structure configuration.

Optionally, the pilot configuration includes a side length of a pilot pattern; further, the pilot pattern further includes at least one of information about a power of a resource element occupied by the pilot, pilot power information, and a pilot sending periodicity.

The side length of the pilot pattern may be determined based on a resource element occupied by a pilot in the delay-Doppler domain and a resource element occupied by a guard band in the delay-Doppler domain. The information about a power of a resource element occupied by the pilot may include an offset (offset) of the power of the resource element occupied by the pilot relative to a power of a resource element occupied by data in the delay-Doppler domain, or an absolute value of the power of the resource element occupied by the pilot.

Optionally, the frame structure configuration includes a side length of a delay-Doppler resource block. Further, the frame structure configuration further includes at least one of a subframe length and a subcarrier spacing.

The side length of the delay-Doppler resource block may be denoted as $(M, N)$, and the side length of the pilot pattern may be denoted as $(l, k)$.

In this embodiment, based on the correspondence relationship between the frame structure configuration and the pilot configuration, the pilot configuration corresponding to the second pilot pattern may be indicated, and a pilot configuration corresponding to the first pilot pattern may further be indicated. This is not further limited herein.

It should be understood that in this embodiment, the receiving device may indicate the second pilot pattern and the frame structure configuration by using a frame indicator message, thereby reducing signaling overheads.

Optionally, in some embodiments, the correspondence relationship between the frame structure configuration and the pilot configuration includes any one of the following:

a one-to-one correspondence between the frame structure configuration and the pilot configuration; and
a correspondence between each frame structure configuration and at least two different pilot configurations.

In this embodiment, the correspondence relationship between the frame structure configuration and the pilot configuration may be understood as any one of the following:

a correspondence relationship between $(M, N)$ and $(l_\tau, k_v)$;
a correspondence relationship between $(M, N)$ and $(l_\tau, k_v$ and the pilot power information);
a correspondence relationship between $(M, N)$ and $(l_\tau, k_v$ and the pilot sending periodicity);
a correspondence relationship between $(M, N$ and a subframe length) and $(l_\tau, k_v$ and the pilot sending periodicity);
a correspondence relationship between $(M, N$ and the subframe length) and $(l_\tau, k_v$, the pilot sending periodicity, and the pilot power information); and
a correspondence relationship between $(M, N$, the subframe length, and $\Delta f)$ and $(l_\tau, k_v$, the pilot sending periodicity, and the pilot power information).

Optionally, the correspondence relationship between the frame structure configuration and the pilot configuration includes any one of the following:

a one-to-one correspondence between the frame structure configuration and the pilot configuration; and
a correspondence between each frame structure configuration and at least two different pilot configurations.

In this embodiment, the one-to-one correspondence between the frame structure configuration and the pilot configuration may be understood as that the pilot pattern is related to a size of a data packet. To be specific, the side length of the pilot pattern $(l_\tau, k_v)$ is in direct proportion to the side length $(M, N)$ of the delay-Doppler resource block. For example, a bigger data packet is more important, and therefore, a larger pilot pattern ensures that estimation is accurate; while a smaller data packet is less important, and even if estimation accuracy does not satisfy a decoding requirement, the problem can be solved by flexible retransmission. In this way, not only accurate estimation is ensured, but also an occupation of resources is reduced. An example in which the correspondence relationship between the frame structure configuration and the pilot configuration is *(M, N)* and *($l_\tau$, $k_v$)* is used for description. In this case, an index table of the frame structure configuration and the pilot configuration may be agreed in a protocol or preconfigured by the sending device and is as shown in Table 3:

**Table 3**

| Index | Frame structure configuration | Pilot configuration |
|-------|-------------------------------|---------------------|
| 1 | $(M_1, N_1)$ | $(l_1, k_1)$ |
| 2 | $(M_2, N_2)$ | $(l_2, k_2)$ |
| ... | ... | ... |

Optionally, in a case in which each frame structure configuration corresponds to at least two different pilot configurations, the target index value includes a first index value, and the first index value is used to indicate the target pilot configuration corresponding to the second pilot pattern.

Optionally, in some embodiments, the target index value further includes a second index value, and the second index value is used to indicate the frame structure configuration corresponding to the target pilot configuration.

In this embodiment, because one frame structure configuration corresponds to at least two different pilot configurations, a pilot configuration corresponding to a currently configured frame structure configuration may be indicated by using the first index value. In this way, the second pilot pattern may be indicated by using different first indication information. For example, in a case in which a frame structure is relatively stable and is less likely to be changed, only a changed pilot configuration is indicated. To be specific, the target index value only includes the first index value. In this case, the second pilot pattern is determined based on the first index value and the current frame structure configuration. In a case in which a frame structure is changed, a changed pilot configuration and a changed frame structure configuration are indicated. To be specific, the target index value includes the first index value and the second index value. In this case, the second pilot pattern is determined based on the first index value and the second index value, and the frame structure configuration indicated by the second index value may be understood as the currently configured frame structure configuration.

An example in which the correspondence relationship between the frame structure configuration and the pilot configuration is *(M, N)* and *($l_\tau$, $k_v$)* is used for description. In this case, an index table of the frame structure configuration and the pilot configuration may be agreed in a protocol or preconfigured by the sending device and is as shown in Table 4:

**Table 4**

| Index 1 | Frame structure configuration | Index 2 | Pilot configuration |
|---------|-------------------------------|---------|---------------------|
| 1 | $(M_1, N_1)$ | 1 | $(l_1, k_1)$ |
|   |              | 2 | $(l_2, k_2)$ |
| 2 | $(M_2, N_2)$ | 1 | $(l_3, k_3)$ |
|   |              | 2 | $(l_4, k_4)$ |
| ... | ... | ... | ... |

Optionally, in some embodiments, in a case in which the pilot pattern corresponding to the measurement pilot is the first pilot pattern, the method further includes: sending, for intervals of second preset time periods, fourth indication information, where the fourth indication information is used to indicate an adjustment of the first pilot pattern into a third pilot pattern, and a side length of the third pilot pattern is greater than or equal to a preset value.

In this embodiment, the third pilot pattern may be understood as a pilot pattern used for initially obtaining channel information. At an initial obtaining stage of communication, channel information remains unknown to the receiving device. To ensure accuracy of initial channel state estimation, the sending device may send a pilot with a large enough guard interval, that is, send a pilot based on the third pilot pattern. In this embodiment, sending a pilot based on the third pilot pattern may be understood as sending an initial signal. The third pilot pattern configured for the receiving device by using the fourth indication information is sent periodically, which is equivalent to sending the initial signal periodically, to accurately measure and refresh $\tau_{max}$ and $v_{max}$ of a channel. In this way, a too small guard interval of the pilot pattern is avoided, so as to prevent an inaccurate delay-Doppler response of the channel because the channel gets worse suddenly.

Optionally, in some embodiments, that a side length of the third pilot pattern is greater than or equal to a preset value may be understood as that both values of *l* and *k* are greater than or equal to the preset value, or a value of *l* is greater than or equal to a first preset value, and a value of k is greater than or equal to a second preset value. The preset value may be understood as a side length value corresponding to an optimal pilot pattern.

For better understanding of this application, different instances are given below to describe in detail an implementation process of this application.

Embodiment 1: The receiving device performs measurement.

A sending device first sends a configuration of a pilot pattern to a receiving device, where the configuration of the pilot pattern should be a group of pilot configurations with an index predefined in a protocol, and the sending device indicates an index value via a pilot configuration message. After receiving the index, the receiving device can correctly learn the pilot pattern to be sent by the sending device subsequently. After receiving a pilot, the receiving device may perform measurement and channel estimation based on known information.

It is assumed that a pilot is sent with a periodicity T. To prevent too frequent feedbacks, the receiving device may define a measurement window with a length $nT$. All measurement results within $nT$ are counted and denoted as $(\tau, v) = \{\tau_i, v_i\}, 0 < i \leq n$. Values of measurement results of various times within one measurement window are compared, and $\tau_{max} = \max_i \tau$, $v_{max} = \max_i v$ is used. The receiving device sends $\tau_{max}$ and $v_{max}$ that are obtained through measurement to the sending device in a feedback message. The sending device decides a new pilot pattern based on the feedback message.

To further reduce overheads, the receiving device may not directly indicate numerical values of $\tau_{max}$ and $v_{max}$, but use only two bits to indicate an increase or a decrease respectively of a side length in each dimension of a current pilot pattern (where each bit correspondingly indicates one side length). The transmit end makes an adjustment based on a received indication and a step size specified in a protocol. Particularly, the step size may be a group of numerical values predefined in a protocol, and one value is selected when used.

Alternatively, the receiving device directly reports an index of a pilot pattern preferred by the receiving device to the sending device. The pilot pattern and the corresponding index are defined in a protocol or configured by the sending device for the receiving device.

Optionally, the pilot configuration message may be carried in downlink control information (Downlink Control Information, DCI) or sidelink control information (Sidelink Control Information, SCI) in a control channel. The message may alternatively be carried in a radio resource control (Radio Resource Control, RRC) message or a medium access control control element (Medium Access Control Control Element, MAC CE) in a data channel. The feedback message may be carried in uplink control information (Uplink Control Information, UCI) or SCI in a control channel, or may be carried in a message in a data channel. If the indication message is two-bit, this may be indicated through pilot blind detection.

It should be understood that a pilot configuration message of the first time may be optional. In other words, the receiving device may directly measure a pilot to obtain a measurement result and further report based on the measurement result. For example, in direct measurement, a cell reference signal (Cell Reference Signal, CRS) in 4G or a synchronization signal and PBCH block (Synchronization Signal and PBCH block, SSB) in 5G may be used.

Embodiment 2: The sending device performs measurement.

The sending device measures a channel characteristic. A receiving device sends a measurement pilot periodically, aperiodically, or in a manner of triggering by the sending device, to send an uplink pilot. It is assumed that a measurement pilot is sent with a periodicity T. To prevent too frequent updates of a pilot pattern, the sending device may define a measurement window with a length $nT$. All measurement results within $nT$ are counted and denoted as $(\tau, v) = \{\tau_i, v_i\}, 0 < i \leq n$. Values of measurement results of various times within one measurement window are compared, and $\tau_{max} = \max_i \tau$, $v_{max} = \max_i v$ is used. The sending device decides a new pilot pattern based on $\tau_{max}$ and $v_{max}$ that are obtained through measurement.

A pilot pattern sent by the sending device is defined in a protocol or configured by a base station, that is, the base station configures one pilot pattern and triggers the sending device for sending.

The sending device sends a configuration of pilot pattern that is determined in a previous step to the receiving device. The configuration of the pilot pattern is a group of pilot configurations with an index predefined in a protocol, and the sending device indicates an index value via a pilot configuration message. After receiving the index, the receive end can correctly learn the pilot pattern to be sent by the sending device subsequently. After receiving a pilot, the receiving device may perform channel estimation based on known information.

Optionally, the measurement pilot sent by the receiving device is sent periodically, aperiodically, or in a manner of triggering by a base station during a continuous connection, and may be encapsulated together with data, or may be encapsulated alone by using a relatively small resource block. In this embodiment, processing of the receiving device becomes less complicated, so that power consumption of the receiving device can be reduced.

Embodiment 3: An indirect indication solution, that is, a pilot pattern is related to a size of a data packet, is presented.

A side length $(l_\tau, k_v)$ of a pilot pattern (including a guard symbol) is in proportion to a side length *(M, N)* of a data mapping grid. A benefit of a proportional design is that because a bigger data packet is more important, a larger pilot pattern ensures accurate estimation. A smaller data packet is less important, and even if estimation accuracy does not satisfy a decoding requirement, the problem can be solved by flexible retransmission.

Optionally, a group of correspondence relationships between *(M, N)* and $(l_\tau, k_v)$ may be defined as shown in Table 1 in the foregoing embodiment.

Alternatively, a group of correspondence relationships between *(M, N)* and $(l_\tau, k_v,$ the pilot power information) may be defined; or

a group of correspondence relationships between *(M, N)* and $(l_\tau, k_v,$ the pilot sending periodicity) may be defined; or
a group of correspondence relationships between *(M, N,* a subframe length) and $(l_\tau, k_v,$ the pilot sending periodicity) may be defined; or
a group of correspondence relationships between *(M, N,* the subframe length) and $(l_\tau, k_v,$ the pilot sending periodicity, the pilot power information) may be defined; or
a group of correspondence relationships between *(M, N,* the subframe length, $\Delta f)$ and $(l_\tau, k_v,$ the pilot sending periodicity, the pilot power information) may be defined.

It should be understood that in this embodiment of this application, *(M, N),* the subframe length, and $\Delta f$ may be combined in any way, and $(l_\tau, k_v)$, the pilot periodicity, and the pilot power information may be combined in any way.

The subframe length may be a length of a time-domain block including X OTFSs, and X is a positive integer.

As the sending device indicates an index value in Table 1 in a frame indicator message, the receiving device can learn about a pilot pattern for channel estimation. By using this design, $\tau_{max}$ and $v_{max}$ do not need to be accurately measured, but a known ACK/NACK message may be used to determine whether need to change a paired frame structure and pilot pattern. For example, when receiving a NACK message, the transmit end considers that a signal sending rate needs to be reduced to enhance a decoding success rate, and therefore actively selects a larger $(M_1, N_1)$ and $(l_1, k_1)$, to achieve a lower bit rate and higher channel estimation accuracy.

In this embodiment, measurement and feedback are not needed, so that resource overheads are reduced.

Embodiment 4: A supplement to Embodiment 1 to Embodiment 3.

An initialization initial signal is mainly used to initially obtain channel information. At an initial obtaining node in the communication, the channel information remains unknown to a receiving device. To ensure accurate estimation of an initial channel status, a sending device sends a pilot with a large enough guard interval, that is, the initial signal. $\tau_{max}$ and $v_{max}$ estimated by using the pilot are used for subsequent pilot sending. The pilot is adjusted dynamically based on a pilot measurement result that is sent afterwards periodically.

In addition, the initialization initial signal in this embodiment may be sent periodically and used to measure and refresh $\tau_{max}$ and $v_{max}$ of a channel accurately. In this way, a too small guard interval of the pilot pattern is avoided, so as to prevent an inaccurate delay-Doppler response of the channel because the channel gets worse suddenly.

Refer to FIG. 5. FIG. 5 is a flowchart of a pilot processing method according to an embodiment of this application. The method is performed by a receiving device, as shown in FIG. 5, and includes the following steps:

Step 501: receiving, based on a first pilot pattern, a first pilot sent by a sending device; and

Step 502: sending feedback information based on the first pilot, where the feedback information is used to determine whether to update the first pilot pattern.

Optionally, after the step of sending feedback information based on the first pilot, the method further includes:

receiving first indication information in a case in which the sending device determines, based on the feedback information, to update the first pilot pattern, where the first indication information is used to indicate a second pilot pattern, and the second pilot pattern is determined based on the feedback information; and
receiving a second pilot based on the second pilot pattern.

Optionally, the first pilot pattern is a rectangular resource pattern formed with $l \times k$ resource elements and includes a central resource element having a pilot pulse and empty resource elements set around the resource element having the pilot pulse.

Optionally, the feedback information includes at least one of the following:

a measurement result of the first pilot within a first preset time period;
second indication information, where the second indication information is used to indicate a recommended pilot pattern, and the recommended pilot pattern is determined based on the measurement result of the first pilot;
third indication information, where the third indication information is used to indicate adjustment information of a length of each side in the first pilot pattern, and the adjustment information is determined based on the measurement result of the first pilot; and

a hybrid automatic repeat request HARQ feedback for data packet decoding based on a channel estimation result of the first pilot.

Optionally, before the step of receiving a second pilot based on the second pilot pattern, the method further includes:

determining, based on a correspondence relationship between a frame structure configuration and a pilot configuration, and a target index value indicated by the first indication information, the second pilot pattern, where the target index value is used to indicate a target pilot configuration corresponding to the second pilot pattern.

Optionally, the correspondence relationship between the frame structure configuration and the pilot configuration includes any one of the following:

a one-to-one correspondence between the frame structure configuration and the pilot configuration; and
a correspondence between each frame structure configuration and at least two different pilot configurations.

Optionally, in a case in which each frame structure configuration corresponds to at least two different pilot configurations, the target index value includes a first index value, and the first index value is used to indicate the target pilot configuration corresponding to the second pilot pattern.

Optionally, the target index value further includes a second index value, and the second index value is used to indicate the frame structure configuration corresponding to the target pilot configuration.

Optionally, the method further includes:

receiving, for intervals of second preset time periods, fourth indication information sent by the sending device, where the fourth indication information is used to indicate an adjustment of the first pilot pattern into a third pilot pattern, and a side length of the third pilot pattern is greater than or equal to a preset value.

Optionally, a time length of the first preset time period is $Q \times T$, Q is an integer greater than 1, and T is a sending periodicity of the first pilot.

Optionally, the measurement result of the first pilot includes a maximum delay and a maximum Doppler frequency shift of a multipath channel.

Optionally, the method further includes: receiving or sending a pilot configuration message, where the pilot configuration message is used to configure the first pilot pattern.

Optionally, the pilot configuration includes a side length of a pilot pattern.

Optionally, the pilot configuration further includes at least one of pilot power information and a pilot sending periodicity.

Optionally, the frame structure configuration includes a side length of a delay-Doppler resource block.

Optionally, the frame structure configuration further includes at least one of a subframe length and a subcarrier spacing.

It should be noted that this embodiment serves as an implementation of the receiving device corresponding to the embodiment shown in FIG. 3. For specific implementations of this embodiment, reference may be made to related descriptions of the embodiment shown in FIG. 3, with the same beneficial effects achieved. To avoid repetition, details are not described herein again.

Refer to FIG. 6. FIG. 6 is a flowchart of another pilot processing method according to an embodiment of this application. The method is performed by a receiving device, as shown in FIG. 6, and includes the following steps:

Step 601: sending a measurement pilot, where the measurement pilot is used to determine whether to update a pilot pattern.

Optionally, after the step of sending a measurement pilot, the method further includes: receiving first indication information in a case in which the sending device determines, based on a measurement result of the measurement pilot, to update the first pilot pattern, where the first indication information is used to indicate an updated second pilot pattern, and the second pilot pattern is determined based on the measurement result; and

receiving a second pilot based on the second pilot pattern.

Optionally, the measurement result of the measurement pilot includes a maximum delay and a maximum Doppler frequency shift of a multipath channel.

Optionally, before the step of receiving a second pilot based on the second pilot pattern, the method further includes:

determining, based on a correspondence relationship between a frame structure configuration and a pilot configuration, and a target index value indicated by the first indication information, the second pilot pattern, where the target index value is used to indicate a target pilot configuration corresponding to the second pilot pattern.

Optionally, the correspondence relationship between the frame structure configuration and the pilot configuration includes any one of the following:

a one-to-one correspondence between the frame structure configuration and the pilot configuration; and
a correspondence between each frame structure configuration and at least two different pilot configurations.

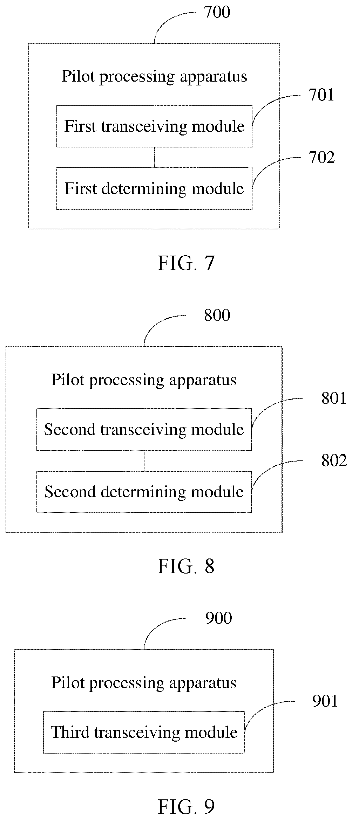

Optionally, in a case in which each frame structure configuration corresponds to at least two different pilot configurations, the target index value includes a first index value, and the first index value is used to indicate the target pilot configuration corresponding to the second pilot pattern.
Optionally, the target index value further includes a second index value, and the second index value is used to indicate the frame structure configuration corresponding to the target pilot configuration.
Optionally, a pilot pattern corresponding to the measurement pilot is a measurement pilot pattern or a first pilot pattern used for channel measurement and channel estimation.
Optionally, the first pilot pattern is a rectangular resource pattern formed with $l \times k$ resource elements and includes a central resource element having a pilot pulse and empty resource elements set around the resource element having the pilot pulse.
Optionally, in a case in which the pilot pattern corresponding to the measurement pilot is the first pilot pattern, the method further includes:
receiving, for intervals of second preset time periods, fourth indication information sent by the sending device, where the fourth indication information is used to indicate an adjustment of the first pilot pattern into a third pilot pattern, and a side length of the third pilot pattern is greater than or equal to a preset value.
Optionally, the pilot configuration includes a side length of a pilot pattern.
Optionally, the pilot configuration further includes at least one of pilot power information and a pilot sending periodicity.
Optionally, the frame structure configuration includes a side length of a delay-Doppler resource block.
Optionally, the frame structure configuration further includes at least one of a subframe length and a subcarrier spacing.
It should be noted that this embodiment serves as an implementation of the receiving device corresponding to the embodiment shown in FIG. 4. For specific implementations of this embodiment, reference may be made to related descriptions of the embodiment shown in FIG. 4, with the same beneficial effects achieved. To avoid repetition, details are not described herein again.
It should be noted that the pilot processing method according to the embodiments of this application may be performed by a pilot processing apparatus, or a control module that is in the pilot processing apparatus and that is configured to perform the pilot processing method. In an embodiment of this application, that the pilot processing apparatus performs the pilot processing method is used as an example to describe the pilot processing apparatus according to this embodiment of this application.
Refer to FIG. 7. FIG. 7 is a structural diagram of a pilot processing apparatus according to an embodiment of this application. As shown in FIG. 7, the pilot processing apparatus 700 includes:

a first transceiving module 701, configured to receive feedback information, where the feedback information is feedback information that is sent by a receiving device based on a first pilot received based on a first pilot pattern; and
a first determining module 702, configured to determine, based on the feedback information, whether to update the first pilot pattern.

Optionally, the first determining module 702 is further configured to determine a second pilot pattern in a case in which the first pilot pattern is determined based on the feedback information to be updated; and
the first transceiving module 701 is further configured to: send first indication information, where the first indication information is used to indicate the second pilot pattern; and send a second pilot based on the second pilot pattern.
Optionally, the first pilot pattern is a rectangular resource pattern formed with $l \times k$ resource elements and includes a central resource element having a pilot pulse and empty resource elements set around the resource element having the pilot pulse.
Optionally, the feedback information includes at least one of the following:

a measurement result of the first pilot within a first preset time period;
second indication information, where the second indication information is used to indicate a recommended pilot pattern, and the recommended pilot pattern is determined based on the measurement result of the first pilot;

third indication information, where the third indication information is used to indicate adjustment information of a length of each side in the first pilot pattern, and the adjustment information is determined based on the measurement result of the first pilot; and

a hybrid automatic repeat request HARQ feedback for data packet decoding based on a channel estimation result of the first pilot.

Optionally, a time length of the first preset time period is $Q{\times}T$, Q is an integer greater than 1, and T is a sending periodicity of the first pilot.

Optionally, the measurement result of the first pilot includes a maximum delay and a maximum Doppler frequency shift of a multipath channel.

Optionally, the first transceiving module 701 is further configured to send or receive a pilot configuration message, where the pilot configuration message is used to configure the first pilot pattern.

Optionally, the first transceiving module 701 is further configured to determine a target index value corresponding to the second pilot pattern based on a correspondence relationship between a frame structure configuration and a pilot configuration, where

the first indication information carries the target index value, and the target index value is used to indicate a target pilot configuration corresponding to the second pilot pattern.

Optionally, the correspondence relationship between the frame structure configuration and the pilot configuration includes any one of the following:

a one-to-one correspondence between the frame structure configuration and the pilot configuration; and
a correspondence between each frame structure configuration and at least two different pilot configurations.

Optionally, in a case in which each frame structure configuration corresponds to at least two different pilot configurations, the target index value includes a first index value, and the first index value is used to indicate the target pilot configuration corresponding to the second pilot pattern.

Optionally, the target index value further includes a second index value, and the second index value is used to indicate the frame structure configuration corresponding to the target pilot configuration.

Optionally, the pilot configuration includes a side length of a pilot pattern.

Optionally, the pilot configuration further includes at least one of pilot power information and a pilot sending periodicity.

Optionally, the frame structure configuration includes a side length of a delay-Doppler resource block.

Optionally, the frame structure configuration further includes at least one of a subframe length and a subcarrier spacing.

Optionally, the first transceiving module 701 is further configured to send , for intervals of second preset time periods, fourth indication information, where the fourth indication information is used to indicate an adjustment of the first pilot pattern into a third pilot pattern, and a side length of the third pilot pattern is greater than or equal to a preset value.

The pilot processing apparatus provided in this embodiment of this application can implement various processes implemented by the sending device in the method embodiment of FIG. 3, which is not repeated herein to avoid repetition.

Refer to FIG. 8. FIG. 8 is a structural diagram of a pilot processing apparatus according to an embodiment of this application. As shown in FIG. 8, the pilot processing apparatus 800 includes:

a second transceiving module 801, configured to receive a measurement pilot; and
a second determining module 802, configured to determine, based on a measurement result of the measurement pilot, whether to update a pilot pattern.

Optionally, the second determining module 802 is further configured to determine, based on the measurement result, a second pilot pattern in a case in which the pilot pattern is determined to be updated based on the measurement result of the measurement pilot; and

the second transceiving module 801 is further configured to: send first indication information where the first indication information is used to indicate the second pilot pattern; and send a second pilot based on the second pilot pattern.

Optionally, the second determining module 802 is further configured to determine, based on the measurement result of the measurement pilot within a third preset time period, the second pilot pattern in a case in which the pilot pattern is determined to be updated based on the measurement result of the measurement pilot within the third preset time period.

Optionally, in a case in which the measurement pilot is a pilot periodically sent by a receiving device, a time length of the third preset time period is $Q{\times}T$, Q is an integer greater than 1, and T is a sending periodicity of the measurement pilot.

Optionally, the measurement result of the measurement pilot includes a maximum delay and a maximum Doppler frequency shift of a multipath channel.

Optionally, the second determining module 802 is further configured to determine a target index value corresponding to the second pilot pattern based on a correspondence relationship between a frame structure configuration and a pilot configuration, where

the sent first indication information carries the target index value, and the target index value is used to indicate a target pilot configuration corresponding to the second pilot pattern.

Optionally, the correspondence relationship between the frame structure configuration and the pilot configuration includes any one of the following:

a one-to-one correspondence between the frame structure configuration and the pilot configuration; and
a correspondence between each frame structure configuration and at least two different pilot configurations.

Optionally, in a case in which each frame structure configuration corresponds to at least two different pilot configurations, the target index value includes a first index value, and the first index value is used to indicate the target pilot configuration corresponding to the second pilot pattern.

Optionally, the target index value further includes a second index value, and the second index value is used to indicate the frame structure configuration corresponding to the target pilot configuration.

Optionally, the pilot configuration includes a side length of a pilot pattern.

Optionally, the pilot configuration further includes at least one of pilot power information and a pilot sending periodicity.

Optionally, the frame structure configuration includes a side length of a delay-Doppler resource block.

Optionally, the frame structure configuration further includes at least one of a subframe length and a subcarrier spacing.

Optionally, a pilot pattern corresponding to the measurement pilot is a measurement pilot pattern or a first pilot pattern used for channel measurement and channel estimation.

Optionally, the first pilot pattern is a rectangular resource pattern formed with $l \times k$ resource elements and includes a central resource element having a pilot pulse and empty resource elements set around the resource element having the pilot pulse.

Optionally, in a case in which the pilot pattern corresponding to the measurement pilot is the first pilot pattern, the second transceiving module 801 is further configured to send, for intervals of second preset time periods, fourth indication information, where the fourth indication information is used to indicate an adjustment of the first pilot pattern into a third pilot pattern, and a side length of the third pilot pattern is greater than or equal to a preset value.

The pilot processing apparatus 800 provided in this embodiment of this application can implement various processes implemented by the sending device in the method embodiment of FIG. 4, which is not repeated herein to avoid repetition.

It should be noted that the pilot processing method according to the embodiments of this application may be performed by a pilot processing apparatus, or a control module that is in the pilot processing apparatus and that is configured to perform the pilot processing method. In an embodiment of this application, that the pilot processing apparatus performs the pilot processing method is used as an example to describe the pilot processing apparatus according to this embodiment of this application.

Refer to FIG. 9. FIG. 9 is a structural diagram of a pilot processing apparatus according to an embodiment of this application. As shown in FIG. 9, the pilot processing apparatus 900 includes:

a third transceiving module 901, configured to: receive, based on a first pilot pattern, a first pilot sent by a sending device; and send feedback information based on the first pilot, where the feedback information is used to determine whether to update the first pilot pattern.

Optionally, the third transceiving module 901 is further configured to: receive first indication information in a case in which the sending device determines, based on the feedback information, to update the first pilot pattern, where the first indication information is used to indicate a second pilot pattern, and the second pilot pattern is determined based on the feedback information; and receive a second pilot based on the second pilot pattern.

Optionally, the first pilot pattern is a rectangular resource pattern formed with $l \times k$ resource elements and includes a central resource element having a pilot pulse and empty resource elements set around the resource element having the pilot pulse.

Optionally, the feedback information includes at least one of the following:

a measurement result of the first pilot within a first preset time period;
second indication information, where the second indication information is used to indicate a recommended pilot pattern, and the recommended pilot pattern is determined based on the measurement result of the first pilot;
third indication information, where the third indication information is used to indicate adjustment information of a length of each side in the first pilot pattern, and the adjustment information is determined based on the measurement result of the first pilot; and
a hybrid automatic repeat request HARQ feedback for data packet decoding based on a channel estimation result of the first pilot.

Optionally, before the step of receiving a second pilot based on the second pilot pattern, the method further includes:

determining, based on a correspondence relationship between a frame structure configuration and a pilot configuration, and a target index value indicated by the first indication information, the second pilot pattern, where the target index value is used to indicate a target pilot configuration corresponding to the second pilot pattern.

Optionally, the correspondence relationship between the frame structure configuration and the pilot configuration includes any one of the following:

a one-to-one correspondence between the frame structure configuration and the pilot configuration; and
a correspondence between each frame structure configuration and at least two different pilot configurations.

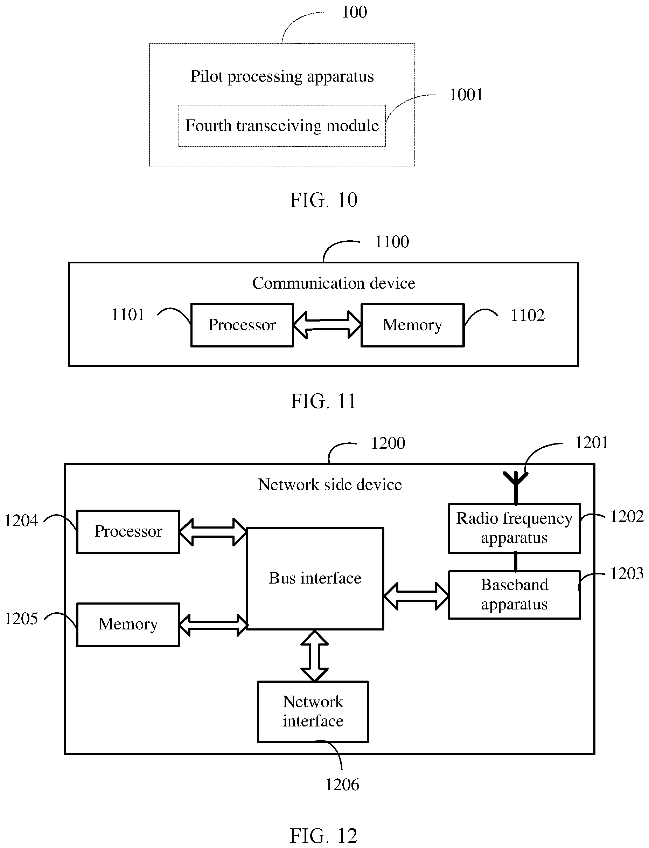

Optionally, in a case in which each frame structure configuration corresponds to at least two different pilot configurations, the target index value includes a first index value, and the first index value is used to indicate the target pilot configuration corresponding to the second pilot pattern.
Optionally, the target index value further includes a second index value, and the second index value is used to indicate the frame structure configuration corresponding to the target pilot configuration.
Optionally, the third transceiving module 901 is further configured to receive, for intervals of second preset time periods, fourth indication information sent by the sending device, where the fourth indication information is used to indicate an adjustment of the first pilot pattern into a third pilot pattern, and a side length of the third pilot pattern is greater than or equal to a preset value.
Optionally, a time length of the first preset time period is $Q \times T$, Q is an integer greater than 1, and T is a sending periodicity of the first pilot.
Optionally, the measurement result of the first pilot includes a maximum delay and a maximum Doppler frequency shift of a multipath channel.
Optionally, the third transceiving module 901 is further configured to receive or send a pilot configuration message, where the pilot configuration message is used to configure the first pilot pattern.
Optionally, the pilot configuration includes a side length of a pilot pattern.
Optionally, the pilot configuration further includes at least one of pilot power information and a pilot sending periodicity.
Optionally, the frame structure configuration includes a side length of a delay-Doppler resource block.
Optionally, the frame structure configuration further includes at least one of a subframe length and a subcarrier spacing.
The pilot processing apparatus provided in this embodiment of this application can implement various processes implemented by the receiving device in the method embodiment of FIG. 5, which is not repeated herein to avoid repetition.
Refer to FIG. 10. FIG. 10 is a structural diagram of a pilot processing apparatus according to an embodiment of this application. As shown in FIG. 10, the pilot processing apparatus 1000 includes:
a fourth transceiving module 1001, configured to send a measurement pilot, where the measurement pilot is used to determine whether to update a pilot pattern.
Optionally, the fourth transceiving module 1001 is configured to: receive first indication information in a case in which the sending device determines, based on the measurement result of the measurement pilot, to update the pilot pattern, where the first indication information is used to indicate a second pilot pattern, and the second pilot pattern is determined based on the measurement result; and receive a second pilot based on the second pilot pattern.
Optionally, the measurement result of the measurement pilot includes a maximum delay and a maximum Doppler frequency shift of a multipath channel.
Optionally, the pilot processing apparatus 1000 further includes:

a third determining module, configured to determine, based on a correspondence relationship between a frame structure configuration and a pilot configuration, and a target index value indicated by the first indication information, the second pilot pattern, where

the target index value is used to indicate a target pilot configuration corresponding to the second pilot pattern.

Optionally, the correspondence relationship between the frame structure configuration and the pilot configuration includes any one of the following:

a one-to-one correspondence between the frame structure configuration and the pilot configuration; and
a correspondence between each frame structure configuration and at least two different pilot configurations.

Optionally, in a case in which each frame structure configuration corresponds to at least two different pilot configurations, the target index value includes a first index value, and the first index value is used to indicate the target pilot configuration corresponding to the second pilot pattern.

Optionally, the target index value further includes a second index value, and the second index value is used to indicate the frame structure configuration corresponding to the target pilot configuration.

Optionally, a pilot pattern corresponding to the measurement pilot is a measurement pilot pattern or a first pilot pattern used for channel measurement and channel estimation.

Optionally, the first pilot pattern is a rectangular resource pattern formed with $l \times k$ resource elements and includes a central resource element having a pilot pulse and empty resource elements set around the resource element having the pilot pulse.

Optionally, in a case in which the pilot pattern corresponding to the measurement pilot is the first pilot pattern, the fourth transceiving module 1001 is further configured to:
receive, for intervals of second preset time periods, fourth indication information sent by the sending device, where the fourth indication information is used to indicate an adjustment of the first pilot pattern into a third pilot pattern, and a side length of the third pilot pattern is greater than or equal to a preset value.

Optionally, the pilot configuration includes a side length of a pilot pattern.

Optionally, the pilot configuration further includes at least one of pilot power information and a pilot sending periodicity.

Optionally, the frame structure configuration includes a side length of a delay-Doppler resource block.

Optionally, the frame structure configuration further includes at least one of a subframe length and a subcarrier spacing.

The pilot processing apparatus provided in this embodiment of this application can implement various processes implemented by the receiving device in the method embodiment of FIG. 6, which is not repeated herein to avoid repetition.

The pilot processing apparatus in this embodiment of this application may be an apparatus, or may be a component, an integrated circuit, or a chip in user equipment. The apparatus may be a mobile terminal, or a non-mobile terminal. For example, the mobile device may include but is not limited to the types of the user equipment 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The pilot processing apparatus in this embodiment of this application may be an apparatus with an operating system. The operating system may be an Android (Android) operating system, an iOS operating system, or another possible operating system. This is not specifically limited in the embodiments of this application.

The pilot processing apparatus provided in this embodiment of this application can implement the processes implemented in the method embodiments of FIG. 3 to FIG. 6, and achieve same technical effects. To avoid repetition, details are not described herein again.

Optionally, as shown in FIG. 11, an embodiment of this application further provides a communication device 1100, including a processor 1101, a memory 1102, a program or an instruction that is stored in the memory 1102 and that can run on the processor 1101. For example, when the communication device 1100 is a receiving device, the program or the instruction is executed by the processor 1101 to implement various processes in the pilot processing method embodiment, and same technical effects can be achieved. When the communication device 1100 is a sending device, and the program or the instruction is executed by the processor 1101, the processes of the foregoing pilot processing method embodiment are implemented, with same technical effects achieved. To avoid repetition, details are not described herein again.

Specifically, an embodiment of this application further provides a network side device. As shown in FIG. 12, the network side device 1200 includes an antenna 1201, a radio frequency apparatus 1202, and a baseband apparatus 1203. The antenna 1201 is connected to the radio frequency apparatus 1202. The network side device may be a receiving device, or may be a sending device. When the receiving device is a terminal, the sending device may be another terminal or a network side device. When the receiving device is a network side device, the sending device is a terminal. In the uplink direction, the radio frequency device 1202 receives information through the antenna 1201, and sends the received information to the baseband apparatus 1203 for processing. In a downlink direction, the baseband apparatus 1203 processes to-be-sent information, and sends the to-be-sent information to the radio frequency apparatus 1202. After processing the received information, the radio frequency apparatus 1202 sends the information by using the antenna 1201.

The foregoing band processing apparatus may be located in the baseband apparatus 1203, and the method performed by the network side device in the foregoing embodiment may be implemented in the baseband apparatus 1203. The baseband apparatus 1203 includes a processor 1204 and a memory 1205.

The baseband apparatus 1203 may include, for example, at least one baseband board, and a plurality of chips are arranged on the baseband board. As shown in FIG. 12, one of the chips is, for example, the processor 1204, and is connected to the memory 1205, to invoke a program in the memory 1205, so as to perform the operations of the network side device shown in the foregoing method embodiment.

The baseband apparatus 1203 may further include a network interface 1206, configured to exchange information with the radio frequency apparatus 1202, where the interface is, for example, a common public radio interface (common public radio interface, CPRI for short).

Specifically, the network side device in this embodiment of this application further includes an instruction or a program that is stored in the memory 1205 and executable on the processor 1204. When the network side device is a sending device, the processor 1204 invokes the instruction or the program in the memory 1205 to control to perform the method performed by the modules shown in FIG. 7 and FIG. 8, or when the network side device is a receiving device, the processor 1204 invokes the instruction or the program in the memory 1205 to control to perform the method performed by the modules shown in FIG. 9 and FIG. 10, and same technical effects are achieved. To avoid repetition, details are not described herein.

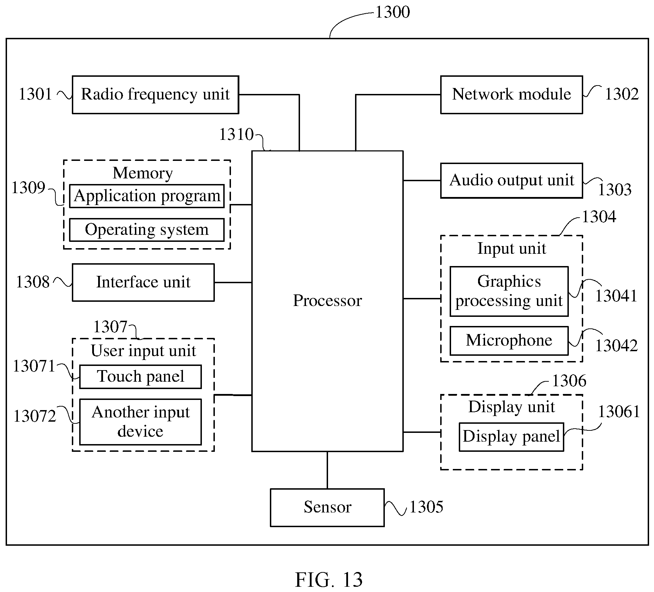

FIG. 13 is a schematic diagram of a hardware structure of a terminal device for implementing the embodiments of this application.

The terminal device 1300 includes but is not limited to components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art can understand that the terminal device 1300 may further include a power supply (for example, a battery) that supplies power to each component. The power supply may be logically connected to the processor 1310 by using a power supply management system, to implement functions such as charging and discharging management, and power consumption management by using the power supply management system. The structure of the terminal device shown in FIG. 13 constitutes no limitation on the terminal device, and the terminal device may include more or fewer components than those shown in the figure, or combine some components, or have different component arrangements. Details are not described herein.

It should be understood that, in this embodiment of this application, the input unit 1304 may include a graphics processing unit (Graphics Processing Unit, GPU) 13041 and a microphone 13042. The graphics processing unit 13041 processes image data of a static picture or a video obtained by an image capture apparatus (such as a camera) in a video capture mode or an image capture mode. The display unit 1306 may include a display panel 13061, and the display panel 13061 may be configured in a form of a liquid crystal display, an organic light-emitting diode, or the like. The user input unit 1307 includes a touch panel 13071 and another input device 13072. The touch panel 13071 is also referred to as a touchscreen. The touch panel 13071 may include two parts: a touch detection apparatus and a touch controller. The another input device 13072 may include but is not limited to one or more of a physical keyboard, a function key (such as a volume control key or an on/off key), a trackball, a mouse, a joystick, and the like. Details are not provided herein again.

In this embodiment of this application, the radio frequency unit 1301 receives downlink data from a network device and then sends the downlink data to the processor 1310 for processing; and sends uplink data to the network device. Generally, the radio frequency unit 1301 includes but is not limited to: an antenna, at least one amplifier, a transceiver, a coupler, a low noise amplifier, a duplexer, and the like.

The memory 1309 may be configured to store a software program or an instruction and various data. The memory 109 may mainly include a program or instruction storage area and a data storage area. The program or instruction storage area may store an operating system, and an application or an instruction required by at least one function (for example, a sound playing function or an image playing function). In addition, the memory 1309 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1310 may include one or more processing units. Optionally, an application processor and a modem processor may be integrated into the processor 1310. The application processor mainly processes an operating system, a user interface, an application, an instruction, or the like. The modem processor mainly processes wireless communication, for example, a baseband processor. It can be understood that, alternatively, the modem processor may not be integrated into the processor 1310.

When the sending device is a terminal, and the receiving device is another terminal or a network side device: The radio frequency unit 1301 is configured to receive feedback information, where the feedback information is feedback information that is sent by a receiving device based on a first pilot received based on a first pilot pattern.

The radio frequency unit 1301 is configured to determine, based on the feedback information, whether to update the first pilot pattern.

The radio frequency unit 1301 is configured to receive a measurement pilot; and the radio frequency unit 1301 is configured to determine, based on a measurement result of the measurement pilot, whether to update a pilot pattern.

It should be understood that, in this embodiment, the processor 1310 and the radio frequency unit 1301 can implement various processes implemented by the sending device in the pilot processing method embodiments of FIG. 3 and FIG. 4. To avoid repetition, details are not provided herein again.

When the receiving device is a terminal, and the sending device is another terminal or a network side device: The radio frequency unit 1301 is configured to: receive, based on a first pilot pattern, a first pilot sent by a sending device; and send feedback information based on the first pilot, where the feedback information is used to determine whether to update the first pilot pattern. Alternatively, the radio frequency unit 1301 is configured to send a measurement pilot, where the measurement pilot is used to determine whether to update a pilot pattern.

It should be understood that, in this embodiment, the processor 1310 and the radio frequency unit 1301 can implement various processes implemented by the receiving device in the pilot processing method embodiments of FIG. 5 and FIG. 6. To avoid repetition, details are not provided herein again.

An embodiment of this application further provides a readable storage medium. The readable storage medium stores a program or an instruction. When the program or the instruction is executed by a processor, various processes of the foregoing pilot processing method embodiment are implemented, and same technical effects can be achieved. To avoid repetition, details are not provided herein again.

The processor is a processor in the electronic device in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip. The chip includes a processor and a communication interface, the communication interface is coupled to the processor, and the processor is configured to run a program or an instruction of a network device to implement various processes of the foregoing pilot processing method embodiment, and same technical effects can be achieved. To avoid repetition, details are not described herein again.

It should be understood that the chip mentioned in this embodiment of this application may also be referred to as a system-level chip, a system chip, a system on chip, a system chip on chip, and the like.

It should be noted that, in this specification, the terms "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the methods and apparatuses in the implementations of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementation manners, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of this application essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, a base station, or the like) to perform the method described in the embodiments of this application.

The embodiments of this application are described above in conjunction with the accompanying drawings, but this application is not limited to the foregoing specific implementations. The foregoing specific implementations are merely examples instead of restriction. Under enlightenment of this application, a person of ordinary skills in the art may create many forms without departing from the mission and the protection scope of the claims of this application, all of which shall fall within the protection scope of this application.

**Claims**

1.  A pilot processing method, performed by a sending device and comprising:

    receiving feedback information, wherein the feedback information is feedback information that is sent by a receiving device based on a first pilot received based on a first pilot pattern; and
    determining, based on the feedback information, whether to update the first pilot pattern.

2.  The method according to claim 1, wherein after the step of determining, based on the feedback information, whether to update the first pilot pattern, the method further comprises:

    determining a second pilot pattern in a case in which the first pilot pattern is determined based on the feedback information to be updated;
    sending first indication information, wherein the first indication information is used to indicate the second pilot pattern; and
    sending a second pilot based on the second pilot pattern.

3.  The method according to claim 1, wherein the first pilot pattern is a rectangular resource pattern formed with $l \times k$ resource elements and comprises a central resource element having a pilot pulse and empty resource elements set around the resource element having the pilot pulse.

4.  The method according to claim 3, wherein the feedback information comprises at least one of the following:

    a measurement result of the first pilot within a first preset time period;
    second indication information, wherein the second indication information is used to indicate a recommended pilot pattern, and the recommended pilot pattern is determined based on the measurement result of the first pilot;
    third indication information, wherein the third indication information is used to indicate adjustment information of a length of each side in the first pilot pattern, and the adjustment information is determined based on the measurement result of the first pilot; and
    a hybrid automatic repeat request HARQ feedback for data packet decoding based on a channel estimation result of the first pilot.

5.  The method according to claim 4, wherein a time length of the first preset time period is Q×T, Q is an integer greater than 1, and T is a sending periodicity of the first pilot.

6.  The method according to claim 4, wherein the measurement result of the first pilot comprises a maximum delay and a maximum Doppler frequency shift of a multipath channel.

7.  The method according to claim 1, wherein before the step of receiving feedback information, the method further comprises:
    sending or receiving a pilot configuration message, wherein the pilot configuration message is used to configure the first pilot pattern.

8.  The method according to claim 2, wherein before the step of sending first indication information, the method further comprises:

    determining a target index value corresponding to the second pilot pattern based on a correspondence relationship between a frame structure configuration and a pilot configuration, wherein
    the first indication information carries the target index value, and the target index value is used to indicate a target pilot configuration corresponding to the second pilot pattern.

9.  The method according to claim 8, wherein the correspondence relationship between the frame structure configuration and the pilot configuration comprises any one of the following:

    a one-to-one correspondence between the frame structure configuration and the pilot configuration; and
    a correspondence between each frame structure configuration and at least two different pilot configurations.

10. The method according to claim 9, wherein in a case in which each frame structure configuration corresponds to at least two different pilot configurations, the target index value comprises a first index value, and the first index value is used to indicate the target pilot configuration corresponding to the second pilot pattern.

11. The method according to claim 10, wherein the target index value further comprises a second index value, and the second index value is used to indicate the frame structure configuration corresponding to the target pilot configuration.

12. The method according to claim 8, wherein the pilot configuration comprises a side length of a pilot pattern.

13. The method according to claim 12, wherein the pilot configuration further comprises at least one of pilot power information and a pilot sending periodicity.

14. The method according to claim 8, wherein the frame structure configuration comprises a side length of a delay-Doppler resource block.

15. The method according to claim 14, wherein the frame structure configuration further comprises at least one of a subframe length and a subcarrier spacing.

16. The method according to claim 1, wherein the method further comprises:
sending, for intervals of second preset time periods, fourth indication information, wherein the fourth indication information is used to indicate an adjustment of the first pilot pattern into a third pilot pattern, and a side length of the third pilot pattern is greater than or equal to a preset value.

17. A pilot processing method, performed by a sending device and comprising:

receiving a measurement pilot; and
determining, based on a measurement result of the measurement pilot, whether to update a pilot pattern.

18. The method according to claim 17, wherein after the step of determining, based on a measurement result of the measurement pilot, whether to update a pilot pattern, the method further comprises:

determining, based on the measurement result, a second pilot pattern in a case in which the pilot pattern is determined to be updated based on the measurement result of the measurement pilot;
sending first indication information, wherein the first indication information is used to indicate the second pilot pattern; and
sending a second pilot based on the second pilot pattern.

19. The method according to claim 18, wherein the step of determining, based on the measurement result, a second pilot pattern in a case in which the pilot pattern is determined to be updated based on the measurement result of the measurement pilot comprises:
determining, based on the measurement result of the measurement pilot within a third preset time period, the second pilot pattern in a case in which the pilot pattern is determined to be updated based on the measurement result of the measurement pilot within the third preset time period.

20. The method according to claim 19, wherein in a case in which the measurement pilot is a pilot periodically sent by a receiving device, a time length of the third preset time period is $Q \times T$, Q is an integer greater than 1, and T is a sending periodicity of the measurement pilot.

21. The method according to claim 17, wherein the measurement result of measurement pilot comprises a maximum delay and a maximum Doppler frequency shift of a multipath channel.

22. The method according to claim 18, wherein before the step of sending first indication information, the method further comprises:

determining a target index value corresponding to the second pilot pattern based on a correspondence relationship between a frame structure configuration and a pilot configuration, wherein
the sent first indication information carries the target index value, and the target index value is used to indicate a target pilot configuration corresponding to the second pilot pattern.

23. The method according to claim 22, wherein the correspondence relationship between the frame structure configuration and the pilot configuration comprises any one of the following:

   a one-to-one correspondence between the frame structure configuration and the pilot configuration; and
   a correspondence between each frame structure configuration and at least two different pilot configurations.

24. The method according to claim 23, wherein in a case in which each frame structure configuration corresponds to the at least two different pilot configurations, the target index value comprises a first index value, and the first index value is used to indicate the target pilot configuration corresponding to the second pilot pattern.

25. The method according to claim 24, wherein the target index value further comprises a second index value, and the second index value is used to indicate the frame structure configuration corresponding to the target pilot configuration.

26. The method according to claim 22, wherein the pilot configuration comprises a side length of a pilot pattern.

27. The method according to claim 26, wherein the pilot configuration further comprises at least one of pilot power information and a pilot sending periodicity.

28. The method according to claim 22, wherein the frame structure configuration comprises a side length of a delay-Doppler resource block.

29. The method according to claim 28, wherein the frame structure configuration further comprises at least one of a subframe length and a subcarrier spacing.

30. The method according to claim 17, wherein a pilot pattern corresponding to the measurement pilot is a measurement pilot pattern or a first pilot pattern used for channel measurement and channel estimation.

31. The method according to claim 30, wherein the first pilot pattern is a rectangular resource pattern formed with $l \times k$ resource elements and comprises a central resource element having a pilot pulse and empty resource elements set around the resource element having the pilot pulse.

32. The method according to claim 30, wherein in a case in which the pilot pattern corresponding to the measurement pilot is the first pilot pattern, the method further comprises:
   sending, for intervals of second preset time periods, fourth indication information, wherein the fourth indication information is used to indicate an adjustment of the first pilot pattern into a third pilot pattern, and a side length of the third pilot pattern is greater than or equal to a preset value.

33. A pilot processing method, performed by a receiving device and comprising:

   receiving, based on a first pilot pattern, a first pilot sent by a sending device; and
   sending feedback information based on the first pilot, wherein the feedback information is used to determine whether to update the first pilot pattern.

34. The method according to claim 33, wherein after the step of sending feedback information based on the first pilot, the method further comprises:

   receiving first indication information in a case in which the sending device determines, based on the feedback information, to update the first pilot pattern, wherein the first indication information is used to indicate a second pilot pattern, and the second pilot pattern is determined based on the feedback information; and
   receiving a second pilot based on the second pilot pattern.

35. The method according to claim 33, wherein the first pilot pattern is a rectangular resource pattern formed with $l \times k$ resource elements and comprises a central resource element having a pilot pulse and empty resource elements set around the resource element having the pilot pulse.

36. The method according to claim 35, wherein the feedback information comprises at least one of the following:

   a measurement result of the first pilot within a first preset time period;

second indication information, wherein the second indication information is used to indicate a recommended pilot pattern, and the recommended pilot pattern is determined based on the measurement result of the first pilot; third indication information, wherein the third indication information is used to indicate adjustment information of a length of each side in the first pilot pattern, and the adjustment information is determined based on the measurement result of the first pilot; and
a hybrid automatic repeat request HARQ feedback for data packet decoding based on a channel estimation result of the first pilot.

37. The method according to claim 34, wherein before the step of receiving a second pilot based on the second pilot pattern, the method further comprises:

determining, based on a correspondence relationship between a frame structure configuration and a pilot configuration, and a target index value indicated by the first indication information, the second pilot pattern, wherein the target index value is used to indicate a target pilot configuration corresponding to the second pilot pattern.

38. The method according to claim 37, wherein the correspondence relationship between the frame structure configuration and the pilot configuration comprises any one of the following:

a one-to-one correspondence between the frame structure configuration and the pilot configuration; and
a correspondence between each frame structure configuration and at least two different pilot configurations.

39. The method according to claim 38, wherein in a case in which each frame structure configuration corresponds to the at least two different pilot configurations, the target index value comprises a first index value, and the first index value is used to indicate the target pilot configuration corresponding to the second pilot pattern.

40. The method according to claim 39, wherein the target index value further comprises a second index value, and the second index value is used to indicate the frame structure configuration corresponding to the target pilot configuration.

41. The method according to claim 33, wherein the method further comprises:
receiving, for intervals of second preset time periods, fourth indication information sent by the sending device, wherein the fourth indication information is used to indicate an adjustment of the first pilot pattern into a third pilot pattern, and a side length of the third pilot pattern is greater than or equal to a preset value.

42. A pilot processing method, performed by a receiving device and comprising:
sending a measurement pilot, wherein the measurement pilot is used to determine whether to update a pilot pattern.

43. The method according to claim 42, wherein after the step of sending a measurement pilot, the method further comprises: receiving first indication information in a case in which the sending device determines, based on a measurement result of the measurement pilot, to update the first pilot pattern, wherein the first indication information is used to indicate an updated second pilot pattern, and the second pilot pattern is determined based on the measurement result; and
receiving a second pilot based on the second pilot pattern.

44. The method according to claim 42, wherein the measurement result of measurement pilot comprises a maximum delay and a maximum Doppler frequency shift of a multipath channel.

45. The method according to claim 43, wherein before the step of receiving a second pilot based on the second pilot pattern, the method further comprises:

determining, based on a correspondence relationship between a frame structure configuration and a pilot configuration, and a target index value indicated by the first indication information, the second pilot pattern, wherein the target index value is used to indicate a target pilot configuration corresponding to the second pilot pattern.

46. The method according to claim 45, wherein the correspondence relationship between the frame structure configuration and the pilot configuration comprises any one of the following:

a one-to-one correspondence between the frame structure configuration and the pilot configuration; and
a correspondence between each frame structure configuration and at least two different pilot configurations.

**47.** The method according to claim 46, wherein in a case in which each frame structure configuration corresponds to the at least two different pilot configurations, the target index value comprises a first index value, and the first index value is used to indicate the target pilot configuration corresponding to the second pilot pattern.

**48.** The method according to claim 47, wherein the target index value further comprises a second index value, and the second index value is used to indicate the frame structure configuration corresponding to the target pilot configuration.

**49.** The method according to claim 42, wherein a pilot pattern corresponding to the measurement pilot is a measurement pilot pattern or a first pilot pattern used for channel measurement and channel estimation.

**50.** The method according to claim 49, wherein the first pilot pattern is a rectangular resource pattern formed with $l \times k$ resource elements and comprises a central resource element having a pilot pulse and empty resource elements set around the resource element having the pilot pulse.

**51.** The method according to claim 49, wherein in a case in which the pilot pattern corresponding to the measurement pilot is the first pilot pattern, the method further comprises:
receiving, for intervals of second preset time periods, fourth indication information sent by the sending device, wherein the fourth indication information is used to indicate an adjustment of the first pilot pattern into a third pilot pattern, and a side length of the third pilot pattern is greater than or equal to a preset value.

**52.** A pilot processing apparatus, comprising:

a first transceiving module, configured to receive feedback information, wherein the feedback information is feedback information that is sent by a receiving device based on a first pilot received based on a first pilot pattern; and
a first determining module, configured to determine, based on the feedback information, whether to update the first pilot pattern.

**53.** A pilot processing apparatus, comprising:

a second transceiving module, configured to receive a measurement pilot; and
a second determining module, configured to determine, based on a measurement result of the measurement pilot, whether to update a pilot pattern.

**54.** A pilot processing apparatus, comprising:
a third transceiving module, configured to: receive, based on a first pilot pattern, a first pilot sent by a sending device; and send feedback information based on the first pilot, wherein the feedback information is used to determine whether to update the first pilot pattern.

**55.** A pilot processing apparatus, comprising:
a fourth transceiving module, configured to send a measurement pilot, wherein the measurement pilot is used to determine whether to update a pilot pattern.

**56.** A communication device, comprising a memory, a processor, and a program that is stored in the memory and executable on the processor, wherein when the program is executed by the processor, steps of the pilot processing method according to any one of claims 1 to 32 are implemented, or when the program is executed by the processor, steps of the pilot processing method according to any one of claims 33 to 51 are implemented.

**57.** A readable storage medium, wherein the readable storage medium stores a program or an instruction, and when the program or the instruction is executed by a processor, steps of the pilot processing method according to any one of claims 1 to 32 are implemented, or when the program or the instruction is executed by a processor, steps of the pilot processing method according to any one of claims 33 to 51 are implemented.

FIG. 1

FIG. 2

Receive feedback information, where the feedback information is feedback information that is sent by a receiving device based on a first pilot received based on a first pilot pattern — 301

Determine, based on the feedback information, whether to update the first pilot pattern — 302

FIG. 3

Receive a measurement pilot — 401

Determine, based on a measurement result of the measurement pilot, whether to update a pilot pattern — 402

FIG. 4

Receive, based on a first pilot pattern, a first pilot sent by a sending device — 501

Send feedback information based on the first pilot, where the feedback information is used by the sending device to determine whether to update the first pilot pattern — 502

FIG. 5

Send a measurement pilot, where the measurement pilot is used to determine whether to update a pilot pattern — 601

FIG. 6

700

Pilot processing apparatus

701

First transceiving module

702

First determining module

FIG. 7

800

Pilot processing apparatus

801

Second transceiving module

802

Second determining module

FIG. 8

900

Pilot processing apparatus

901

Third transceiving module

FIG. 9

FIG. 10

FIG. 11

FIG. 12

1300

| 1301 | Radio frequency unit | | | | Network module | 1302 |

1310

| 1309 | Memory | | | | | |
| | Application program | | | | Audio output unit | 1303 |
| | Operating system | | | | | |

1304

| 1308 | Interface unit | | | Input unit | | |
| | | | | Graphics processing unit | | 13041 |

Processor

| 1307 | | | | Microphone | 13042 |
| | User input unit | | | | |
| 13071 | Touch panel | | | | |

1306

| 13072 | Another input device | | | Display unit | | 13061 |
| | | | | Display panel | | |

| Sensor | 1305 |

FIG. 13

## INTERNATIONAL SEARCH REPORT

| International application No. |
| --- |
| **PCT/CN2021/116437** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

H04L, H04W

Documentation searched other than minimum documentation to the extent that such documents are included in the fields searched

Electronic data base consulted during the international search (name of data base and, where practicable, search terms used)

CNPAT, WPI, EPODOC, 3GPP, GOOGLE: 导频, 图案, 样式, 图样, 测量, 反馈, 上报, 报告, 更新, 改变, 调整, pilot, pattern, measure, feedback, report, update, change, adjust

### C. DOCUMENTS CONSIDERED TO BE RELEVANT

| Category* | Citation of document, with indication, where appropriate, of the relevant passages | Relevant to claim No. |
| --- | --- | --- |
| X | WO 2017132806 A1 (HUAWEI TECHNOLOGIES CO., LTD.) 10 August 2017 (2017-08-10) description pages 13-15, 24-25, figures 6-7 | 1-57 |
| X | CN 101888289 A (ZTE CORPORATION) 17 November 2010 (2010-11-17) description paragraphs 37-103 | 1-57 |
| X | WO 2016037315 A1 (HUAWEI TECHNOLOGIES CO., LTD.) 17 March 2016 (2016-03-17) claims 1-26 | 1-57 |
| A | CN 109286428 A (RESEARCH INSTITUTE OF CHINA MOBILE COMMUNICATIONS CORPORATION et al.) 29 January 2019 (2019-01-29) entire document | 1-57 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 October 2021** | **26 November 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/116437**

| Patent document cited in search report | | | Publication date (day/month/year) | Patent family member(s) | | | Publication date (day/month/year) |
|---|---|---|---|---|---|---|---|
| WO | 2017132806 | A1 | 10 August 2017 | None | | | |
| CN | 101888289 | A | 17 November 2010 | WO | 2010130187 | A1 | 18 November 2010 |
| WO | 2016037315 | A1 | 17 March 2016 | None | | | |
| CN | 109286428 | A | 29 January 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010924341